# FASCICULE DE BREVET EUROPEEN

(11) **EP 3 331 714 B1**
(45) Date de publication et mention de la délivrance du brevet: **05.06.2019**
(21) Numéro de dépôt: 16760765.4
(22) Date de dépôt: 28.07.2016
(51) Int. Cl.: B60H 1/00, B60H 3/06, B60H 3/00

(54) **PROCEDE DE DEPOLLUTION DE L'AIR AU SEIN DE L'HABITACLE D'UN VEHICULE AUTOMOBILE PREALABLEMENT A L'UTILISATION DUDIT VEHICULE**
VERFAHREN ZUR REINIGUNG DER LUFT IM INNENRAUM EINES KRAFTFAHRZEUGS VOR DEM GEBRAUCH DES BESAGTEN FAHRZEUGS
METHOD FOR CLEANING UP THE AIR IN THE PASSENGER COMPARTMENT OF A MOTOR VEHICLE PRIOR TO USE OF SAID VEHICLE

(30) Priorité: 05.08.2015 FR 1557540
(43) Date de publication de la demande: 13.06.2018
(73) Titulaire: PSA AUTOMOBILES S.A., 78300 Poissy (FR)
(72) Inventeur: PAJOT, Karine, 91370 Verrieres Le Buisson (FR); AUBRY, Vincent, 91400 Orsay (FR); DUMUR, Denis, 78990 Elancourt (FR); PINTAT, Bruno, 92140 Clamart (FR)
(86) Numéro de dépôt international: PCT/FR2016/051964
(87) Numéro de publication internationale: WO 2017/021625

(56) Documents cités:
- DE-A1- 19 604 661
- DE-A1-102007 056 770
- US-A1- 2009 193 821

## Description

L'invention concerne la dépollution de l'air dans un habitacle de véhicule, notamment de véhicule automobile, et vise en particulier un procédé de dépollution de l'air au sein d'un habitacle de véhicule, la dépollution étant réalisée préalablement à l'utilisation du véhicule par un utilisateur.

Un véhicule automobile comprend un système de gestion de l'air au sein de l'habitacle du véhicule afin d'assurer le confort des passagers du véhicule automobile durant un trajet. Un tel système HVAC, pour Heating Ventillation and Air-Conditionning en langue anglaise, signifiant Chauffage, Ventilation et Climatisation, prend aujourd'hui en compte un nouvel élément : la pollution de l'air. En effet, le niveau de pollution de l'air atteint par endroit un niveau tel qu'il est désagréable, voire dangereux, pour un passager du véhicule de respirer un tel air.

De manière connue, un système de dépollution de l'air est disposé dans le véhicule afin de filtrer l'air utilisé pour ventiler l'habitacle du véhicule. Un tel système de dépollution présente cependant des inconvénients. En effet, les systèmes de dépollution de l'air connus sont activés durant l'utilisation du véhicule. Aussi, si l'air est pollué à l'endroit où le véhicule a été stationné pendant un certain temps, l'air de l'habitacle dans lequel entre l'utilisateur est pollué, ce qui présente un inconvénient majeur.

On connaît en outre par le document CN103660849 un système de chauffage et de désodorisation de l'air au sein de l'habitacle, adapté pour pré-conditionner ledit habitacle avant l'utilisation du véhicule par un utilisateur. Un tel système est déclenché grâce aux prévisions météo, ou bien par prédiction de l'heure d'utilisation du véhicule. Ainsi, lorsque l'utilisateur entre dans l'habitacle du véhicule, la température et l'odeur de l'air de l'habitacle sont déjà réglées afin d'améliorer le confort de l'utilisateur. Cependant, un tel système de chauffage présente des inconvénients. Tout d'abord, ledit système de chauffage et de désodorisation n'est pas adapté pour dépolluer l'air de l'habitacle. De plus, la dépollution de l'air nécessitant une quantité plus importante d'énergie, il n'est pas possible d'activer la dépollution de l'air de l'habitacle de manière équivalente.

Le document US 2009/0193821 A1 divulgue un procédé selon la préambule de la revendication 1.

L'invention vise donc à résoudre ces inconvénients en proposant un procédé de dépollution de l'air au sein de l'habitacle d'un véhicule automobile préalablement à l'utilisation dudit véhicule.

Pour parvenir à ce résultat, la présente invention concerne un procédé de dépollution de l'air au sein de l'habitacle d'un véhicule automobile préalablement à l'utilisation dudit véhicule, selon la revendication 1, le véhicule comprenant des moyens de communication, le procédé comprend :
- une étape de réception, par les moyens de communication, d'une commande de dépollution de l'air de l'habitacle avant l'utilisation du véhicule par un utilisateur,
- une étape de calcul de l'énergie nécessaire à la dépollution de l'air au sein de l'habitacle, et
- une étape de lancement de la dépollution de l'air lorsque le véhicule possède une réserve d'énergie suffisante.

Grâce au procédé selon l'invention, l'air au sein de l'habitacle d'un véhicule peut être dépollué avant qu'un utilisateur n'entre dans le véhicule. Ainsi, toute respiration, par l'utilisateur, d'air fortement pollué dans l'habitacle est prévenue. De plus, la dépollution de l'air est garantie grâce à la vérification que l'énergie disponible dans le véhicule permet de dépolluer l'air. Ainsi, l'utilisateur est assuré de pouvoir utiliser le véhicule après la dépollution.

Selon une première forme de réalisation selon l'invention, la commande de dépollution est une commande manuelle envoyée par l'utilisateur. Ainsi, l'utilisateur peut commander la dépollution avant d'utiliser le véhicule.

Selon une deuxième forme de réalisation selon l'invention, la commande de dépollution correspond à une alerte pollution afin de dépolluer automatiquement l'habitacle.

Selon une troisième forme de réalisation selon l'invention, la commande de dépollution est consécutive à une planification automatique de dépollution afin de dépolluer automatiquement l'habitacle préalablement à une utilisation planifiée du véhicule.

Selon l'invention, le procédé comprend une étape de mesure du niveau de pollution de l'air au sein de l'habitacle et une étape de calcul du temps nécessaire pour dépolluer l'air de l'habitacle jusqu'à un seuil de pollution prédéterminé.

De manière avantageuse, la dépollution est lancée lorsque le temps nécessaire calculé pour dépolluer l'air de l'habitacle jusqu'à un seuil de pollution prédéterminé est inférieur au temps avant une utilisation prévue du véhicule afin de garantir la dépollution complète de l'habitacle au moment de l'utilisation du véhicule.

Avantageusement, le véhicule comprenant des moyens de communication, le procédé comprend une étape d'envoi d'une alerte à l'utilisateur via les moyens de communication lorsque le temps nécessaire calculé pour dépolluer l'air de l'habitacle jusqu'à un seuil de pollution prédéterminé est supérieur au temps avant une utilisation prévue du véhicule. Ainsi, toute utilisation du véhicule alors que l'habitacle n'est pas complétement dépolluée est prévenue et l'utilisateur peut décaler son utilisation du véhicule afin de garantir la dépollution complète de l'habitacle.

Avantageusement, le procédé comprend une étape de pressurisation de l'habitacle lorsque le niveau de pollution de l'air de l'habitacle est inférieur au niveau de pollution de l'air extérieur afin d'empêcher la pollution de l'habitacle par l'air extérieur.

Avantageusement, le véhicule comprenant des moyens de communication, le procédé comprend en outre une étape d'envoi d'une alerte batterie à l'utilisateur via les moyens de communication lorsque le véhicule possède une réserve d'énergie insuffisante pour dépolluer l'air de l'habitacle. Ainsi, l'utilisateur peut brancher le véhicule afin de permettre la dépollution de l'habitacle.

L'invention concerne également un système de dépollution de l'air au sein de l'habitacle d'un véhicule automobile comprenant des moyens de dépollution dudit air et des moyens de communication adaptés pour recevoir une commande d'activation desdits moyens de dépollution afin de dépolluer l'air de l'habitacle préalablement à l'utilisation dudit véhicule, de façon à mettre en oeuvre le procédé brièvement décrit précédemment.

D'autres caractéristiques et avantages de l'invention apparaîtront à la lecture de la description détaillée des modes de réalisation de l'invention, donnés à titre d'exemple uniquement, et en référence aux dessins qui montrent :
- figure 1, un schéma d'un système de dépollution de l'air selon une forme de réalisation de l'invention,
- figure 2, un diagramme d'un procédé de fonctionnement du système de la figure 1.

Dans ce qui va suivre, les modes de réalisation décrits s'attachent plus particulièrement à une mise en oeuvre du système de dépollution selon l'invention dans le cadre d'un véhicule automobile. Cependant, toute mise en oeuvre dans un contexte différent, en particulier dans tout type de véhicule, est également visée par la présente invention.

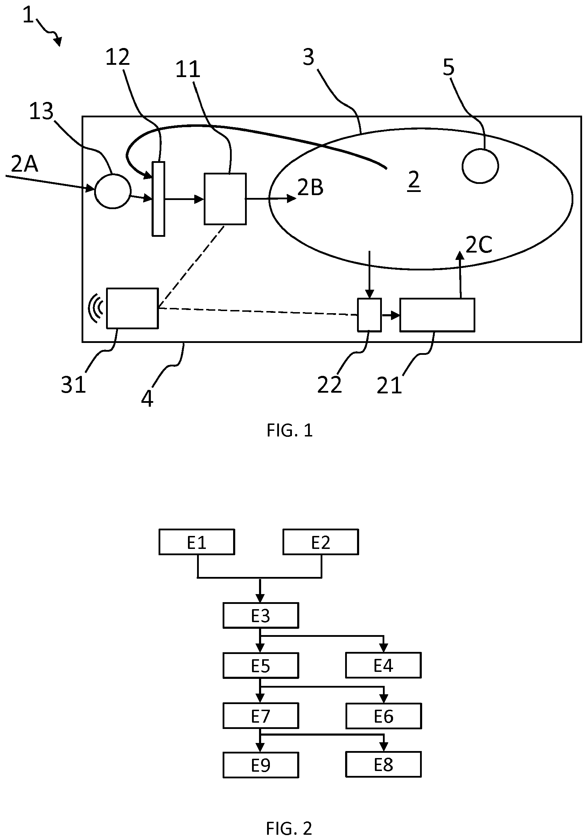

La figure 1 représente un système de dépollution 1 de l'air 2 conforme à la présente invention, au sein de l'habitacle 3 d'un véhicule automobile 4.

Ledit système 1 comprend un capteur 5 de type AQS, pour Air Quality Sensor en langue anglaise, signifiant capteur de qualité de l'air. Le capteur 5 permet de mesurer le niveau de pollution de l'air 2 à l'intérieur de l'habitacle 3 afin de déterminer, lors d'une commande de dépollution de l'air 2 au sein de l'habitacle 3, si l'air 2 de l'habitacle 3 doit être dépollué ou non.

Un tel capteur 5 peut également permettre d'identifier et de quantifier le ou les polluants présents dans l'air 2 afin de déterminer le temps nécessaire pour dépolluer l'air 2.

Pour dépolluer l'air 2, ledit système 1 de dépollution de l'air selon l'invention comprend en outre des moyens de ventilation de l'air 2 dans l'habitacle 3, des moyens de stockage d'air pur et des moyens de communication 31.

Les moyens de ventilation sont adaptés pour être alimentés en air extérieur 2A ou en air 2 de l'habitacle afin d'alimenter l'habitacle 3 en air 2B. Pour ce faire, les moyens de ventilation comprennent un aérateur 11 par lequel de l'air 2B entre dans l'habitacle 3. Un tel aérateur 11 se présente sous la forme de buses installées dans l'habitacle 3 et peut comprendre un ventilateur (non représenté) afin de faciliter la circulation de l'air. Un filtre à air 12, placé en amont de l'aérateur 11, permet de filtrer certaines particules polluantes présentes dans l'air 2A, 2 alimentant les moyens de ventilation afin que l'air 2B entrant dans l'habitacle 3 soit sain pour les passagers du véhicule 4.

Il a été présenté un filtre à air 12 permettant de dépolluer l'air 2A, 2 circulant par les moyens de ventilation, mais il va de soi que tout autre système de dépollution de l'air pourrait convenir, par exemple des systèmes ioniseurs, catalytiques, absorbants, ...etc.

Les moyens de ventilation peuvent également comprendre un capteur 13 de type AQS, pour Air Quality Sensor en langue anglaise, signifiant capteur de qualité de l'air. Le capteur de qualité de l'air 13 permet de mesurer le niveau de pollution de l'air extérieur 2A passant par les moyens de ventilation afin de commander la dépollution de l'air 2 dans l'habitacle 3.

Ainsi, lorsque ledit air extérieur 2A est faiblement pollué, l'air 2A circule jusqu'à l'habitacle 3 en passant par les moyens de ventilation. Lorsque l'air extérieur 2A est fortement pollué, la circulation de l'air extérieur 2A à travers les moyens de ventilation est bloquée par un volet de recyclage (non représenté) situé en amont du filtre à air 12 et en aval du capteur 13 de qualité de l'air extérieur 2A. Un tel volet de recyclage permet ainsi à l'air extérieur 2A d'entrer dans l'habitacle 3 en position ouverte et empêche l'air extérieur 2A de rentrer dans l'habitacle 3 en position fermée. Lorsque l'air extérieur 2A est fortement pollué, l'air 2 au sein de l'habitacle 3 est expulsé de l'habitacle 3, par exemple par des buses d'entrée dans les moyens de ventilation, et passe par les moyens de ventilation afin de dépolluer ledit air 2. Le système 1 est alors dit en fonctionnement fermé dans lequel l'air 2 de l'habitacle 3 est isolé de l'air extérieur 2A.

Par faiblement pollué, on entend de l'air dont l'indice de qualité est inférieur à une valeur prédéterminée. Cette valeur est adaptée selon le pays du monde dans lequel le véhicule est utilisé et selon la législation relative à la pollution de l'air en vigueur dans le pays considéré. Cette valeur est, par exemple, de l'ordre de 50 en Europe. Par fortement pollué, on entend, de la même manière, de l'air dont l'indice de qualité de l'air est supérieur à ladite valeur prédéterminée.

Lorsque de l'air extérieur 2A et l'air 2 de l'habitacle 3 sont pollués, de l'air 2C non pollué est injecté dans l'habitacle 3.

Les moyens de stockage d'air se présentent sous la forme d'un réservoir 21 apte à être rempli d'air non pollué 2C afin de l'injecter dans l'habitacle 3 lorsque l'air extérieur 2A et l'air 2 de l'habitacle 3 présentent un niveau de pollution élevé.

Le réservoir 21 peut être rempli, lors de l'utilisation du véhicule 4, d'air 2 de l'habitacle 3 grâce à un compresseur 22 qui permet de remplir ledit réservoir 21 avec de l'air 2 non pollué. Alternativement, le réservoir 21 peut également être remplacé par un réservoir plein ou bien être rempli d'air non pollué, dans une station-service par exemple.

Lorsque l'habitacle 3 a besoin d'air non pollué, une électrovanne (non représentée) permet de libérer l'air 2C stocké dans le réservoir 21 afin d'injecter de l'air non pollué dans l'habitacle 3.

De manière avantageuse, lorsque le niveau de pollution de l'air 2 de l'habitacle 3 est faiblement pollué, les moyens de ventilation et les moyens de stockage d'air peuvent permettre d'augmenter la pression de l'air 2 au sein de l'habitacle 3 afin d'empêcher l'air extérieur 2A potentiellement plus pollué d'entrer dans l'habitacle 3. Le seuil de pollution prédéterminé, permet d'assurer que l'air 2 de l'habitacle 3 est faiblement pollué.

Les moyens de ventilation et les moyens de stockage d'air sont commandés préalablement à l'utilisation du véhicule automobile 4. Les moyens de ventilation et les moyens de stockage sont alors alimentés par la batterie.

Pour ce faire, les moyens de communication 31 sont adaptés pour communiquer avec l'utilisateur du véhicule 4, notamment via le réseau internet, par exemple avec le téléphone de l'utilisateur. Les moyens de communication 31 peuvent se présenter sous la forme d'un boîtier télématique, d'un BSI, pour Boîtier de Servitude Intelligent, d'un module GPS, ...etc. Les moyens de communication 31 peuvent ainsi recevoir des commandes de l'utilisateur. De telles commandes peuvent, par exemple, consister en un lancement manuel à distance par l'utilisateur de la dépollution de l'air 2 de l'habitacle 3, en la confirmation d'une dépollution planifiée, ...etc.

L'activation des moyens de ventilation et des moyens de stockage peut être planifiée manuellement par l'utilisateur, par exemple en prévision d'une utilisation future du véhicule 4.

Les moyens de communication 31 peuvent en outre consulter une base de données via un système de guidage par satellite GPS ou par internet afin de définir le niveau de pollution de la zone dans laquelle est stationné le véhicule automobile 4. Les données sont de préférence de type AQI, pour Air Quality Index en langue anglaise, signifiant indice de qualité de l'air, telles que par exemple formalisées sous la forme de l'indice AQI américain de l'EPA, pour United States Environmental Protection Agency en langue anglaise, ou bien l'AQI chinois du MEP, pour China's Ministry of Environmental Protection en langue anglaise. Ces données correspondent au niveau de pollution de l'air et définissent des zones par niveau de pollution : des zones dont le niveau de pollution est faible et des zones dont le niveau de pollution est élevé.

Ainsi, lorsque les moyens de communication 31 reçoivent une alerte pollution, les moyens de ventilation et/ou les moyens de stockage d'air sont commandés de manière automatique afin de dépolluer l'air 2 de l'habitacle 3.

Les moyens de ventilation et les moyens de stockage peuvent en outre être commandés de manière automatique pour des trajets récurrents, par exemple les trajets maison-travail et travail-maison, à une fréquence déterminée, par exemple du lundi au vendredi à une heure déterminée de départ et à une heure déterminée de retour. Ainsi, la dépollution de l'habitacle 3 peut être commandée selon les habitudes de l'utilisateur. Avantageusement, les moyens de communication 31 peuvent envoyer un message de confirmation afin d'informer l'utilisateur de la planification et ainsi de permettre à l'utilisateur de confirmer ou d'annuler une telle planification, par exemple lorsqu'il est en congé.

De plus, les moyens de communication 31 peuvent envoyer des messages d'alerte à l'utilisateur. De tels messages peuvent, par exemple, être une alerte batterie lorsque la batterie du véhicule 4 est insuffisante pour dépolluer l'air 2 de l'habitacle 3, une confirmation de dépollution planifiée, ou un message d'alerte lorsque le temps de dépollution de l'air 2 est supérieur au temps avant l'utilisation du véhicule 4 par l'utilisateur afin que l'utilisateur puisse décaler son départ, ...etc.

La mise en oeuvre de la dépollution de l'air 2 selon l'invention au sein de l'habitacle 3 va maintenant être décrite, en référence à la figure 2.

Lorsque le véhicule automobile 4 est stationné, par exemple dans la rue du domicile de l'utilisateur, la dépollution de l'air 2 au sein de l'habitacle 3 est commandée, soit, dans une étape E1, manuellement par l'utilisateur depuis son téléphone, soit, dans une étape E2, de manière automatique lors d'une alerte pollution dans la zone de stationnement ou bien lors d'une dépollution planifiée. Une telle commande est alors envoyée, par exemple par le réseau internet, au système de dépollution 1 du véhicule 4.

Les moyens de communication 31 reçoivent alors dans une étape E3 la commande de dépollution de l'air 2 au sein de l'habitacle 3. Le système 1 calcule alors l'énergie nécessaire pour dépolluer l'air 2 jusqu'à un seuil de pollution prédéterminé, et vérifie si la batterie du véhicule 4 présente un niveau d'énergie suffisant.

Si le niveau de batterie est insuffisant, les moyens de communication 31 envoient, dans une étape E4, une alerte batterie à l'utilisateur afin de l'informer que la batterie du véhicule 4 est insuffisante pour dépolluer l'air 2 de l'habitacle 3.

Si le niveau de batterie est suffisant, le capteur 5 mesure, dans une étape E5, le niveau de pollution de l'air 2 au sein de l'habitacle 3. Si le niveau de pollution est inférieur à un seuil prédéterminé, les moyens de ventilation et les moyens de stockage sont activés, durant une étape E6, lorsque le niveau de pollution de l'air extérieur 2A est supérieur à celui de l'air 2 de l'habitacle 3 afin d'augmenter la pression de l'air 2 au sein de l'habitacle 3. L'habitacle 3 est alors en surpression afin d'empêcher l'air extérieur 2A pollué d'entrer dans l'habitacle 3.

Si le niveau de pollution de l'air 2 de l'habitacle 3 est supérieur au seuil prédéterminé, le système de dépollution 1 calcule, dans une étape E7, le temps nécessaire pour dépolluer l'air 2 jusqu'au un seuil de pollution prédéterminé. Ce calcul prend en compte le niveau de pollution de l'air extérieur 2A, le niveau de pollution de l'air 2 au sein de l'habitacle 3 et la nature de la pollution mesurés par les capteurs AQS 5, 13, ainsi que de l'efficacité du système de dépollution 1.

Si le temps de dépollution calculé est supérieur au temps avant l'utilisation du véhicule 4 par l'utilisateur, les moyens de communication 31 envoient, dans une étape E8, un message d'alerte à l'utilisateur afin de le prévenir pour que ce dernier puisse retarder le moment d'utilisation du véhicule 4.

Si le temps de dépollution calculé est inférieur au temps avant l'utilisation du véhicule 4 par l'utilisateur, la dépollution de l'air 2 de l'habitacle 3 est lancée dans une étape E9. Les moyens de ventilation et/ou de stockage d'air sont alors activés afin de réduire le seuil de pollution de l'air 2 de l'habitacle 3 jusqu'au seuil prédéterminé.

En résumé, la présente invention vise un procédé de dépollution de l'air 2 au sein de l'habitacle 3 d'un véhicule 4 avant l'utilisation dudit véhicule 4 afin que l'air dans l'habitacle 3 présente un faible niveau de pollution lorsqu'un utilisateur du véhicule 4 entre dans ledit véhicule 4.

Il est précisé, en outre, que la présente invention n'est pas limitée aux exemples décrits ci-dessus et est susceptible de nombreuses variantes accessibles à l'homme de l'art.

## Revendications

1. Procédé de dépollution de l'air (2) au sein de l'habitacle (3) d'un véhicule automobile (4) préalablement à l'utilisation dudit véhicule (4), le véhicule (4) comprenant des moyens de communication (31), comprenant :
- une étape (E3) de réception, par les moyens de communication (31), d'une commande de dépollution de l'air (2) de l'habitacle (3) avant l'utilisation du véhicule (4) par un utilisateur,
le procédé étant **caractérisé par**
- une étape (E9) de lancement de la dépollution de l'air (2) lorsque le véhicule possède une réserve d'énergie suffisante,
- une étape (E5) de mesure du niveau de pollution de l'air (2) au sein de l'habitacle (3) ; et
- une étape (E7) de calcul du temps nécessaire pour dépolluer l'air (2) de l'habitacle (3) jusqu'à un seuil de pollution prédéterminé pour en déduire l'énergie nécessaire à la dépollution de l'air (2) au sein de l'habitacle (3).

2. Procédé selon la revendication 1, dans lequel l'étape de dépollution (E9) est lancée lorsque le temps nécessaire calculé pour dépolluer l'air (2) de l'habitacle (3) jusqu'à un seuil de pollution prédéterminé est inférieur au temps avant une utilisation prévue du véhicule (4).

3. Procédé selon la revendication 1, dans lequel le véhicule (4) comprend des moyens de communication (31), ledit procédé comprenant une étape (E8) d'envoi d'une alerte à l'utilisateur via les moyens de communication (31) lorsque le temps nécessaire calculé pour dépolluer l'air (2) de l'habitacle (3) jusqu'à un seuil de pollution prédéterminé est supérieur au temps avant une utilisation prévue du véhicule (4).

4. Procédé selon la revendication 1, dans lequel la commande de dépollution est une commande manuelle envoyée par l'utilisateur.

5. Procédé selon la revendication 1, dans lequel la commande de dépollution correspond à une alerte pollution.

6. Procédé selon la revendication 1, dans lequel la commande de dépollution est consécutive à une planification automatique de dépollution.

7. Procédé selon l'une des revendications 1 à 6, comprenant une étape (E6) de pressurisation de l'habitacle (3) lorsque le niveau de pollution de l'air (2) de l'habitacle (3) est inférieur au niveau de pollution de l'air extérieur (2A).

8. Procédé selon l'une des revendications 1 à 7 dans lequel le véhicule (4) comprenant des moyens de communication (31), ledit procédé comprenant en outre une étape (E4) d'envoi d'une alerte batterie à l'utilisateur via les moyens de communication (31) lorsque le véhicule possède une réserve d'énergie insuffisante pour dépolluer l'air (2) de l'habitacle (3).

9. Système de dépollution (1) de l'air (2) au sein de l'habitacle (3) d'un véhicule automobile (4) comprenant des moyens de dépollution dudit air (2) et des moyens de communication (31) adaptés pour recevoir une commande d'activation desdits moyens de dépollution afin de dépolluer l'air (2) de l'habitacle (3) préalablement à l'utilisation dudit véhicule (4), de façon à mettre en oeuvre le procédé de dépollution de l'air (2) au sein de l'habitacle (3) d'un véhicule automobile (4) selon l'une des revendications 1 à 8.

## Patentansprüche

1. Verfahren zur Reinigung der Luft (2) innerhalb des Innenraums (3) eines Kraftfahrzeugs (4) vor dem Gebrauch des Fahrzeugs (4), wobei das Fahrzeug (4) Kommunikationsmittel (31) umfasst, die Folgendes umfassen:
- einen Schritt des Empfangs (E3) durch die Kommunikationsmittel (31) eines Befehls zum Reinigen der Luft (2) des Innenraums (3) vor dem Gebrauch des Fahrzeugs (4) durch einen Benutzer, Verfahren **gekennzeichnet durch**
- einen Schritt des Startens (E9) des Reinigens der Luft (2), wenn das Fahrzeug eine ausreichende Energiereserve besitzt,
- einen Schritt des Messens (E5) des Verschmutzungsniveaus der Luft (2) innerhalb des Innenraums (3); und
- einen Schritt des Berechnens (E7) der Zeit, die erforderlich ist, um die Luft (2) des Innenraums (3) bis zu einem vorbestimmten Verschmutzungsschwellenwert zu reinigen, um davon die Energie abzuleiten, die für das Reinigen der Luft (2) innerhalb des Innenraums (3) erforderlich ist.

2. Verfahren nach Anspruch 1, wobei der Schritt des Reinigens (E9) gestartet wird, wenn die berechnete erforderliche Zeit zum Reinigen der Luft (2) des Innenraums (3) bis zu einem vorbestimmten Verschmutzungsschwellenwert kleiner ist als die Zeit vor dem vorgesehenen Gebrauch des Fahrzeugs (4).

3. Verfahren nach Anspruch 1, wobei das Fahrzeug (4) Kommunikationsmittel (31) umfasst, wobei das Verfahren einen Schritt des Sendens (E8) einer Warnung an den Benutzer über die Kommunikationsmittel (31) umfasst, wenn die berechnete erforderliche Zeit zum Reinigen der Luft (2) des Innenraums (3) bis zu einem vorbestimmten Verschmutzungsschwellenwert größer ist als die Zeit vor dem vorgesehenen Gebrauch des Fahrzeugs (4).

4. Verfahren nach Anspruch 1, wobei der Reinigungsbefehl ein manueller Befehl, der von dem Benutzer gesendet wird, ist.

5. Verfahren nach Anspruch 1, wobei der Reinigungsbefehl einer Verschmutzungswarnung entspricht.

6. Verfahren nach Anspruch 1, wobei der Reinigungsbefehl auf eine automatische Reinigungsplanung folgt.

7. Verfahren nach einem der Ansprüche 1 bis 6, das einen Schritt des Druckbeaufschlagens (E6) des Innenraums (3) umfasst, wenn das Verschmutzungsniveau der Luft (2) des Innenraums (3) niedriger ist als das Verschmutzungsniveau der Außenluft (2A).

8. Verfahren nach einem der Ansprüche 1 bis 7, wobei das Fahrzeug (4) Kommunikationsmittel (31) umfasst, wobei das Verfahren außerdem einen Schritt des Sendens (E4) einer Batteriewarnung an den Benutzer über die Kommunikationsmittel (31) umfasst, wenn das Fahrzeug eine ausreichende Energiereserve zum Reinigen der Luft (2) des Innenraums (3) besitzt.

9. Reinigungssystem (1) der Luft (2) im Innenraum (3) eines Kraftfahrzeugs (4), das Reinigungsmittel der Luft (2) und Kommunikationsmittel (31) umfasst, die angepasst sind, um einen Aktivierungsbefehl der Reinigungsmittel zu empfangen, um die Luft (2) des Innenraums (3) vor dem Gebrauch des Fahrzeugs (4) derart zu reinigen, dass das Reinigungsverfahren der Luft (2) innerhalb des Innenraums (3) eines Kraftfahrzeugs (4) nach einem der Ansprüche 1 bis 8 umgesetzt wird.

## Claims

1. A method for cleaning up the air (2) in the passenger compartment (3) of a motor vehicle (4) prior to use of said vehicle (4), the vehicle (4) including communication means (31), including:
- a step (E3) of receiving, by the communication means (31), a command for cleaning up the air (2) of the passenger compartment (3) before the use of the vehicle (4) by a user,
the method being **characterized by**
- a step (E9) of starting up the clean-up of the air (2) when the vehicle has a sufficient store of energy,
- a step (E5) of measuring the level of pollution of the air (2) in the passenger compartment (3); and
- a step (E7) of calculating the time necessary for cleaning up the air (2) of the passenger compartment (3) up to a predetermined pollution threshold for deducing therefrom the energy necessary for the cleaning up of the air (2) in the passenger compartment (3).

2. The method according to Claim 1, in which the step of cleaning up (E9) is started up when the calculated necessary time for cleaning up the air (2) of the passenger compartment (3) up to a predetermined pollution threshold is less than the time before a planned use of the vehicle (4).

3. The method according to Claim 1, in which the vehicle (4) includes communication means (31), said method including a step (E8) of sending a warning to the user via the communication means (31) when the calculated necessary time for cleaning up the air (2) of the passenger compartment (3) up to a predetermined pollution threshold is greater than the time before a planned use of the vehicle (4).

4. The method according to Claim 1, in which the clean-up command is a manual command sent by the user.

5. The method according to Claim 1, in which the clean-up command corresponds to a pollution warning.

6. The method according to Claim 1, in which the clean-up command is consecutive to an automatic clean-up planning.

7. The method according to one of Claims 1 to 6, including a step (E6) of pressurization of the passenger compartment (3) when the level of pollution of the air (2) of the passenger compartment (3) is less than the level of pollution of the exterior air (2A).

8. The method according to one of Claims 1 to 7, in which the vehicle (4) including communication means (31), said method further including a step (E4) of sending a battery warning to the user via the communication means (31) when the vehicle has an insufficient store of energy for cleaning up the air (2) of the passenger compartment (3).

9. A system for cleaning up (1) the air (2) in the passenger compartment (3) of a motor vehicle (4) including means for cleaning up said air (2) and communication means (31) suited to receive an activation command of said clean-up means so as to clean up the air (2) of the passenger compartment (3) prior to the use of said vehicle (4), so as to implement the method for cleaning up the air (2) in the passenger compartment (3) of a motor vehicle (4) according to one of Claims 1 to 8.
